(19) Europäisches Patentamt
European Patent Office
Office européen des brevets

(11) EP 4 808 104 A1

# (12) EUROPEAN PATENT APPLICATION

(43) Date of publication:
**16.09.2026 Bulletin 2026/38**

(21) Application number: **26161942.3**

(22) Date of filing: **03.03.2026**

(51) International Patent Classification (IPC):
***H04N 1/028*** *(2006.01)* ***H04N 1/60*** *(2006.01)*

(52) Cooperative Patent Classification (CPC):
**H04N 1/6033; H04N 1/02815**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.03.2025 JP 2025039510**

(71) Applicant: **KYOCERA Document Solutions Inc.**
**Osaka-shi, Osaka 540-8585 (JP)**

(72) Inventor: **TSUNO, Reiko**
**Osaka-shi, Osaka, 540-8585 (JP)**

(74) Representative: **Herrero & Asociados, S.L.**
**Edificio Aqua - Calle Agustín de Foxá, 4-10, 2ºA**
**28036 Madrid (ES)**

## (54) IMAGE FORMING APPARATUS

(57) In an image forming apparatus (1), a light source (52) emits light having a first spectrum (blue light) and light having a second spectrum, and a controller (10) determines, as a ratio between an amount of reflected light of the blue light from a calibration original document prepared for calibrating the light having the second spectrum and a calibration reference value as a reference of the amount of reflected light, a correction value for calibration of an amount of the light having the blue light, and corrects the correction value by multiplying the calibration reference value by a sum of: a value of a Z reference value, i.e., a reference of a Z value in an XYZ color system based on the amount of reflected light of the blue light, divided by the Z value; and a weight according to a value of the Z value subtracted from the Z reference value.



Processed by Luminess, 75001 PARIS (FR)

## Description

BACKGROUND

The present invention relates to image forming apparatuses that read an image on an original document and form an image based on the read image.

Some multicolor copiers convert red (R), green (G), and blue (B) image data (RGB data) read from an original document to cyan (C), magenta (M), yellow (Y), and black (K) density data and subject the density data to halftone processing to generate CMYK halftone data.

An image reading device that reads an image on an original document includes, for example, a light source that irradiates the original document with light, and light-receiving elements (a red light-receiving element, a green light-receiving element, and a blue light-receiving element) that receive reflected light on the original document, which is reflection thereon of light emitted from the light source. A white light source is often used as the light source. The white light source is constituted by, for example, a combination of a blue LED (light emitting diode) and a yellow phosphor that yields a complementary color to blue. Alternatively, a light source having a structure capable of sequentially turning on red light, green light, and blue light may be used.

Generally, the density value (gradation value) of each color of CMYK is calculated from the amount of reflected light of a complementary color to the color. For example, the density value of cyan is calculated from the amount of reflected red light detected by a red light-receiving element (the amount of reflection of light emitted from a light source onto an original document). The reason for this is that red light output from the light source is easily absorbed by cyan and the amount of reflected red light changes more according to changes in the cyan density than the amount of reflected green light and the amount of reflected blue light.

Likewise, the density value of magenta is calculated from the amount of reflected green light detected by a green light-receiving element and the density value of yellow is calculated from the amount of reflected blue light detected by a blue light-receiving element. The density value of black is calculated from the amount of reflected green light detected by the green light-receiving element.

There is proposed a technique for reducing a color reproduction error due to variations among light sources in order to realize an accurate color reproduction. For example, it is proposed to calculate, based on the finding that the brightness and spectrum of blue light vary more than those of red light and green light, the correction value of the amount of reflected blue light.

SUMMARY

A technique improved over the aforementioned technique is proposed as one aspect of the present invention.

An image forming apparatus according to an aspect of the present invention reads an image on an original document and forms an image based on the read image. The image forming apparatus includes a light source, an image reading device, an image forming device, and a control device. The light source includes: a first original light source that emits light having a first spectrum; and a second original light source that emits light having a second spectrum, and emits the light having the first spectrum and the light having the second spectrum. The image reading device generates image data of an RGB color system according to reflected light of the light having the first spectrum from the original document and reflected light of the light having the second spectrum from the original document. The image forming device forms, based on the image data, an image with a recording agent of a CMYK color system. The control device makes a determination of, as a ratio between an amount of reflected light of the light having the first spectrum from a calibration original document prepared for calibration of the light having the second spectrum and a calibration reference value set as a reference of an amount of reflected light of the light having the first spectrum, a correction value for use in calibrating an amount of the light having the first spectrum. Furthermore, the control device corrects the correction value by multiplying the calibration reference value for use in the determination of the correction value by an added value in which a division result obtained by dividing a Z reference value set as a reference of a Z value in an XYZ color system obtained based on the amount of reflected light of the light having the first spectrum by the Z value is added to a weight according to a difference result obtained by subtracting the Z value from the Z reference value.

BRIEF DESCRIPTION OF THE DRAWINGS

FIG. 1 is a schematic block diagram showing an entire configuration of an image forming apparatus according to one embodiment of the present invention.

FIG. 2 is a table showing examples of Lab values, an XYZ_Zdef value, and an RGB_Bdef value of a cyan calibration

patch.

FIG. 3 is a cross-sectional view showing an entire structure of the image forming apparatus according to the one embodiment.

FIG. 4 is a flowchart showing the contents of the procedure of calibration processing in the image forming apparatus according to the one embodiment.

FIGS. 5A and 5B are graphs showing, in the one embodiment, the relationship between the frequency characteristic of a cyan calibration patch and the frequency range of red light and the relationship between the frequency characteristic of a magenta calibration patch and the frequency range of green light, respectively.

FIGS. 6A and 6B are graphs showing, in the one embodiment, the relationship between the frequency characteristic of a yellow calibration patch and the frequency range of blue light and the relationship between the frequency characteristic of a cyan calibration patch and the frequency range of blue light, respectively.

FIG. 7 is a flowchart showing the contents of processing for calculating and correcting a B correction value $\alpha$ in the one embodiment.

FIG. 8 is a graph showing the correlation between read RGB_Bc value and Z value in an XYZ color system.

FIGS. 9A to 9C are graphs showing the relationship between the reflection intensity of yellow toner and the intensity of blue light in the one embodiment.

FIG. 10 is a table showing as examples read RGB_Bc values, Lab values calculated from the read RGB_Bc values, and XYZ_Z values calculated from the Lab values.

FIG. 11A is a table showing as examples uncorrected B correction values $\alpha$ and corrected B correction values $\beta$.

FIG. 11B is a table showing as examples correction results of read RGB_By values.

## DETAILED DESCRIPTION

Hereinafter, a description will be given of an embodiment for practicing the present invention (hereinafter, referred to as an "embodiment") with reference to the drawings.

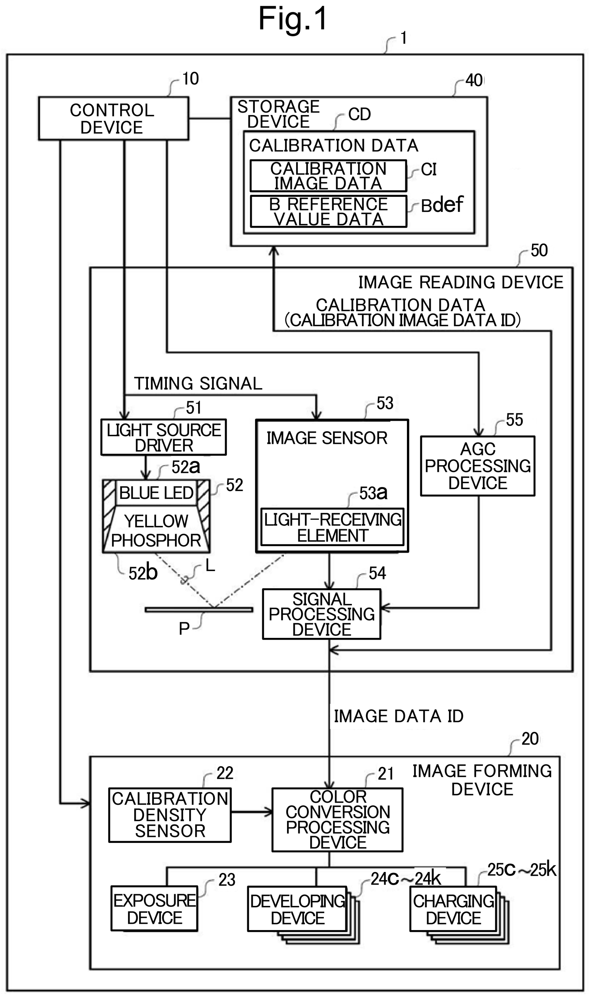

FIG. 1 is a block diagram showing a functional configuration of an image forming apparatus 1 according to one embodiment of the present invention. The image forming apparatus 1 includes a control device 10, an image forming device 20, a storage device 40, and an image reading device 50.

The control device 10 includes a main memory device, such as a RAM or a ROM, and processor, such as an MPU (micro processing unit) or a CPU (central processing unit). Furthermore, the control device 10 has a controller function relating to interfaces for various I/O devices, a USB (universal serial bus), a bus, and other types of hardware to control the whole of the image forming apparatus 1.

The storage device 40 is a storage device formed of a non-transitory recording medium, such as a hard disk drive or a flash memory, and stores control programs and data for processing executed by the control device 10. In this embodiment, the storage device 40 further stores, as calibration data CD for use in printing an adjustment document for CMYK calibration, calibration image data CI and B reference value data Bdef. The calibration image data CI is stored in the form of RGB data in the storage device 40.

The Lab values (in a standard color system) of a cyan calibration patch on a cyan adjustment document are previously measured. The Z value in an XYZ color system (i.e., the XYZ_Z value) is calculated from the Lab values.

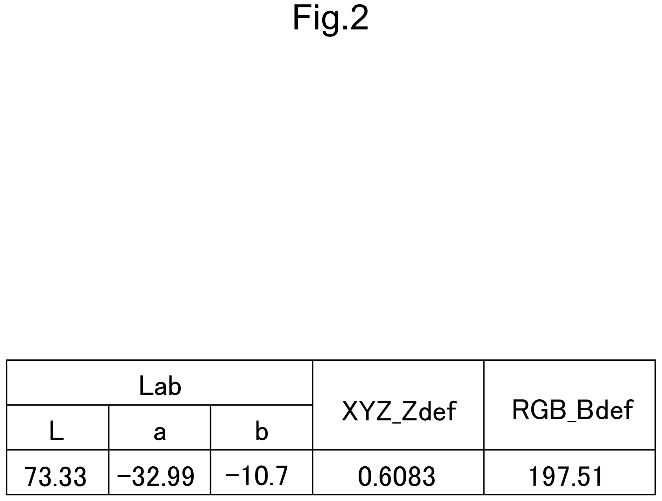

The XYZ_Z value calculated from the Lab values of the cyan calibration patch is stored as a Z reference value XYZ_Zdef (a default value) in the storage device 40. The B reference value data Bdef (a reference value RGB_Bdef) is stored as a default value in the storage device 40 as described previously. FIG. 2 is a table showing examples of Lab values, an XYZ_Zdef value, and an RGB_Bdef value of a cyan calibration patch.

The image reading device 50 reads an image from an original document and generates image data ID as digital data on the read image. The image reading device 50 includes a light source driver 51 and a light source 52. The light source 52 includes a plurality of LEDs (not shown) that irradiate an original document D with light. The light source driver 51 is an LED driver that drives the plurality of LEDs aligned in the main scanning direction and controls on-off action of the light source 52.

The light source 52 is a white light source including a blue LED 52a and a yellow phosphor 52b. The blue LED 52a functions as an original light source of blue light which is one of three primary colors of light. The yellow phosphor 52b is a phosphor that functions as an original light source that emits red light and green light by being irradiated with blue light from the blue LED 52a. Thus, the light source 52 emits red light, green light, and blue light to function as a white light source (a white LED). The light source 52 may have a structure that sequentially turns on red light, green light, and blue light.

A white LED varies the brightness and spectrum of blue light depending on the chromatic rank (color variations). In other words, the spectra of red light and green light emitted as photoluminescence from the phosphor vary less, whereas the spectrum of blue light varies relatively noticeably compared to red light and green light, both varying less in spectrum. This can be attributable to the above structure of the white LED. In this embodiment, the storage device 40 stores B reference value data Bdef serving as a calibration reference value for blue light.

An image sensor 53 is a line sensor including a plurality of light-receiving elements 53a aligned in the main scanning direction. The plurality of light-receiving elements 53a generate respective electric charges photoelectrically converted according to the intensity of light incident on each of them and transfer the electric charges with respective analog shift registers (not shown). Each of the transferred electric charges is converted to an analog electric signal, which is a voltage signal, by a charge-to-voltage converter¥amplifier. Thus, the image sensor 53 can output analog electric signals pixel by pixel in the main scanning direction.

The image reading device 50 further includes a signal processing device 54, an AGC processing device 55, and a white reference sheet (not shown). The signal processing device 54 amplifies the analog electric signal by a gain set by the AGC processing device 55 and stored in the storage device 40 and subjects the amplified analog electric signal to A/D conversion to generate image data ID which is digital data. The image forming device 20 forms an image on a printing medium based on the image data ID and ejects the printing medium with an image formed thereon. The image data ID is data having a range of values from a minimum value "0" to a maximum value "255".

In this embodiment, the AGC processing device 55 is a gain controller that uses a black reference signal and a white reference signal to set an optimum gain and an optimum offset value for each of the plurality of light-receiving elements 53a. The black reference signal is an analog electric signal from each light-receiving element 53a when the light source 52 is in an off state. The white reference signal is an analog electric signal from each light-receiving element 53a when, instead of an original document D, the white reference sheet (not shown) is irradiated with light. The AGC processing device 55 sets the offset value to make the value of image data ID when the black reference signal has been subjected to A/D conversion a minimum value "0". The AGC processing device 55 uses this offset value to set the gain to make the value of image data ID when the white reference signal has been subjected to A/D conversion a maximum value "255".

Thus, the range of values from the minimum value "0" to the maximum value "255" of the image data ID can be effectively used for variations in analog electric signal due to increase and decrease in reflected light between the black reference signal and the white reference signal. However, the light source 52 may vary in brightness among RGB due to its individual variability. In this case, for example, even when the gradations of RGB of an original document used are equal to each other, the gradations of RGB of the original document detected using the light source 52 are not necessarily equal to each other. Specifically, the reason for this is that, for example, when the amount of light of B from the light source 52 is larger than each of the amounts of light of R and G therefrom, the amount of reflected light of B from the original document becomes larger than those of R and G even when the gradations of RGB of the original document are equal to each other.

The image forming device 20 includes a color conversion processing device 21, a calibration density sensor 22, an exposure device 23, developing devices 24c, 24m, 24y, and 24k, and charging devices 25c, 25m, 25y, and 25k. The color conversion processing device 21 color-converts image data ID, which is RGB data, to CMYK data and subjects the CMYK data to halftone processing to generate CMYK halftone data.

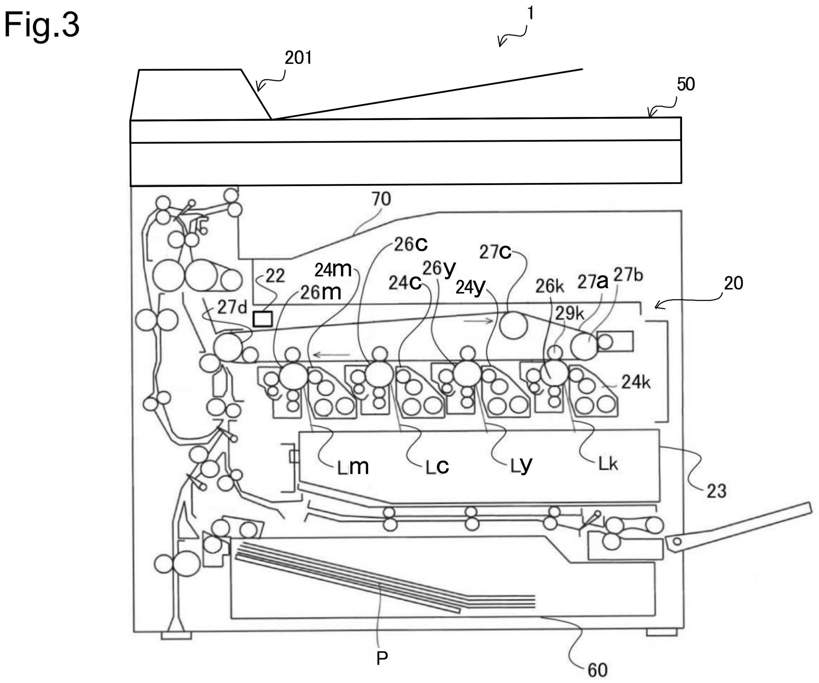

FIG. 3 is a cross-sectional view showing an entire structure of the image forming apparatus 1 according to the one embodiment of the present invention. The image forming apparatus 1 according to this embodiment is a tandem multicolor printer. The image forming device 20 is disposed in the interior of a housing 70 of the image forming apparatus 1. In the image forming device 20, photosensitive drums (image carriers) 26m, 26c, 26y, and 26k are arranged in a row in association with magenta, cyan, yellow, and black colors, respectively. The developing devices 24m, 24c, 24y, and 24k are disposed to adjoin the photosensitive drums 26m, 26c, 26y, and 26k, respectively.

The photosensitive drums 26m, 26c, 26y, and 26k are irradiated with laser light Lm, Lc, Ly, Lk of respective associated colors from the exposure device 23. By this laser light irradiation, electrostatic latent images are formed on the photosensitive drums 26m, 26c, 26y, and 26k. The developing devices 24m, 24c, 24y, and 24k attach toner of different colors to the respective electrostatic latent images formed on the surfaces of the photosensitive drums 26m, 26c, 26y, and 26k while stirring the toner. Thus, a development process is completed and toner images of different colors are formed on the surfaces of the photosensitive drums 26m, 26c, 26y, and 26k.

The image forming device 20 includes an endless intermediate transfer belt 27a. The intermediate transfer belt 27a is mounted around a tension roller 27c, a drive roller 27b, and a driven roller 27d. The intermediate transfer belt 27a is driven into cyclic rotation by the rotation of the drive roller 27b.

For example, a black toner image on the photosensitive drum 26k is primarily transferred to the intermediate transfer belt 27a by holding the intermediate transfer belt 27a between the photosensitive drum 26k and a primary transfer roller 29k and driving the intermediate transfer belt 27a into cyclic rotation. In this respect, the same applies to the other toner images of three colors: magenta, cyan, and yellow. The toner images are primarily transferred, with respective predetermined timings, to the surface of the intermediate transfer belt 27a and thus superimposed one on another, resulting in the formation of a full-color toner image. Thereafter, the full-color toner image is secondarily transferred to a printing sheet P fed from a sheet feed cassette 60 and fixed to the printing sheet P in a well-known fixation process.

The image forming apparatus 1 further includes the image reading device 50. In a document reading operation of the image forming apparatus 1, the image sensor 53 optically reads, for example, an image of an original document D fed from a document feed device 201 included in the image reading device 50 or an image of an original document D placed on an original glass plate (not shown) included in the image reading device 50 and generates image data from the read image.

The image data generated by this reading of the image reading device 50 is saved in the storage device 40, a separate built-in HDD or so on.

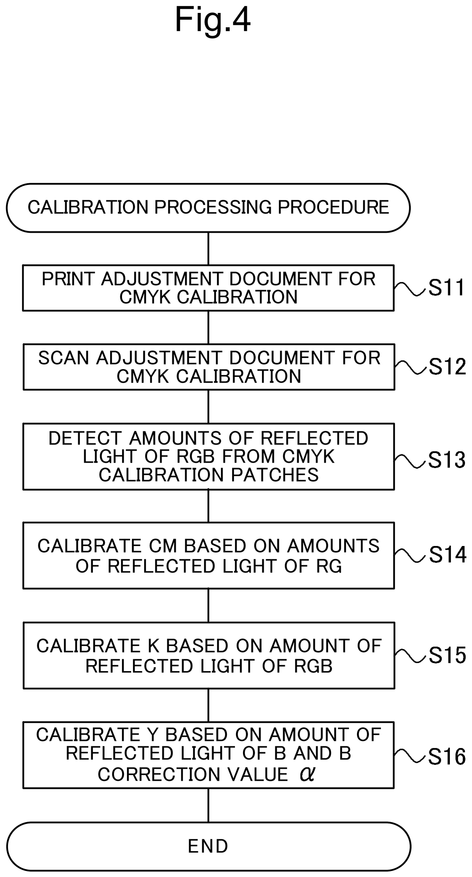

FIG. 4 is a flowchart showing the contents of the procedure of calibration processing in the image forming apparatus 1 according to the one embodiment.

In step S11, the user uses the image forming apparatus 1 to print an adjustment document for CMYK calibration. In this embodiment, the adjustment document for CMYK calibration is an original document to be printed using calibration image data CI (i.e., RGB data for calibration) read from the storage device 40. The RGB data for calibration contains R gradation data for calibration of C (cyan), G gradation data for calibration of M (magenta), B gradation data for calibration of Y (yellow), and RGB (gray) gradation data for calibration of K (black). Printing of an adjustment document for CMYK calibration is made using a user interface for execution provided in a predetermined calibration menu (not shown).

The R gradation data for calibration of C is data for use in printing a plurality of patches representing different gradation levels of C, and the G gradation data for calibration of M, the B gradation data for calibration of Y, and the RGB (gray) gradation data for calibration of K are respective data for use in printing a plurality of patches representing different gradation levels of each of M, Y, and K. The RGB data for calibration is configured to allow the above different types of gradation data to be used to print all the patches on a predetermined single printing medium. In this manner, the image forming apparatus 1 outputs an adjustment document for CMYK calibration based on the calibration image data CI (the RGB data for calibration).

In step S12, the user uses the image reading device 50 of the image forming apparatus 1 to scan the printed adjustment document for CMYK calibration. The image reading device 50 reads an image from the adjustment document for CMYK calibration to generate print image data for calibration which is digital data. The print image data for calibration is generated as RGB image data based on RGB light absorption characteristics of the adjustment document for CMYK calibration. The print image data for calibration may be generated by forming patches on the intermediate transfer belt 27a and detecting the densities of the patches using the calibration density sensor 22.

In step S13, the image forming apparatus 1 detects the amounts of reflected light of RGB based on the print image data for calibration. The amounts of reflected light of RGB correspond to the gradation values of RGB of the print image data for calibration. Specifically, the amounts of reflected light of RGB correspond to the amount Ar of red light absorbed (corresponding to the gradation value of R) by each of patches of different gradation levels on a known cyan adjustment document, the amount Ag of green light absorbed (corresponding to the gradation value of G) by each of patches of different gradation levels on a known magenta adjustment document, the amount Ab of blue light absorbed (corresponding to the gradation value of B) by each of patches of different gradation levels on a known yellow adjustment document, and the amount of RGB light absorbed (corresponding to the gradation value of RGB) by each of patches of different gradation levels on a known gray adjustment document.

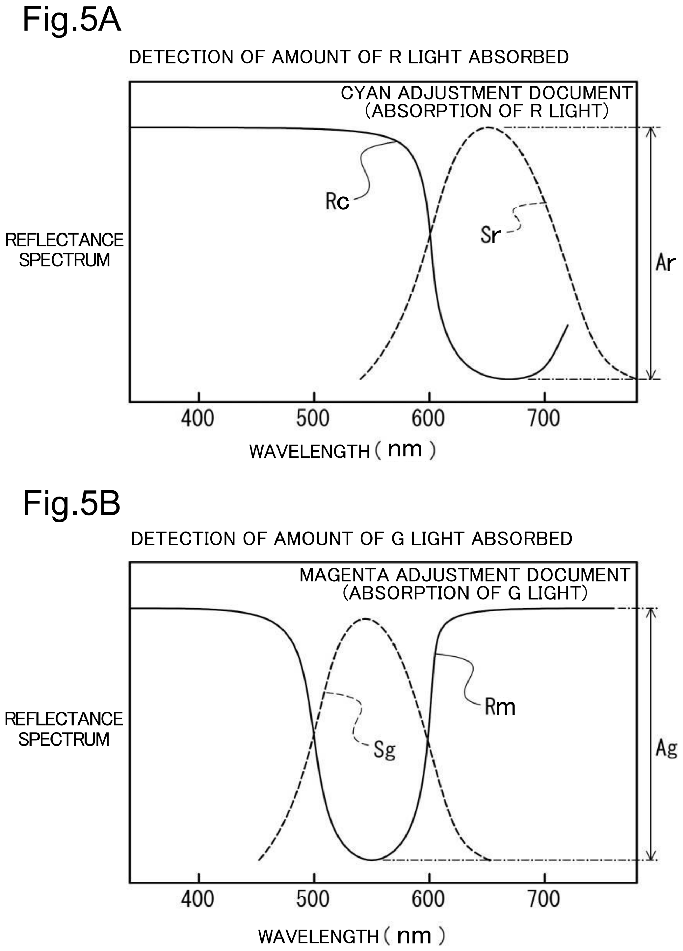

FIGS. 5A and 5B are graphs showing, in the one embodiment, the relationship between the frequency characteristic of a cyan calibration patch and the frequency range of red light and the relationship between the frequency characteristic of a magenta calibration patch and the frequency range of green light, respectively. The horizontal axis represents the wavelength of light and the vertical axis represents the amount of reflected light.

FIG. 5A shows an example of a reflectance spectrum Rc of a cyan calibration patch (referred to also as a C calibration patch) on a cyan adjustment document and an example of an absorption spectrum Sr of the cyan calibration patch. The amount Ar of light absorbed indicates the peak value of the amount of light absorbed by a cyan calibration patch (referred to also as a C calibration patch) on a cyan adjustment document, i.e., the amount of light not reflected by the patch. The amount Ar of light absorbed reaches its peak in the wavelength band of red light.

FIG. 5B shows an example of a reflectance spectrum Rg of a magenta calibration patch (referred to also as an M calibration patch) on a magenta adjustment document and an example of an absorption spectrum Sg of the magenta calibration patch. The amount Ag of light absorbed indicates the peak value of the amount of light absorbed by a magenta calibration patch (referred to also as an M calibration patch) on a magenta adjustment document, i.e., the amount of light not reflected by the patch. The amount Ag of light absorbed reaches its peak in the wavelength band of green light.

The amount Ar of red light absorbed (FIG. 5A) is detected by the image sensor 53 and used for calibration relating to the image forming device 20 by correlation between the gradation value of the cyan calibration patch and the amount Ar of red light absorbed. The amount Ag of green light absorbed (FIG. 5B) is detected by the image sensor 53 and used for calibration relating to the image forming device 20 by correlation between the gradation value of the magenta calibration patch and the amount Ag of green light absorbed. Specifically, the cyan gradation value is associated with the area ratio of cyan dots and the higher the cyan gradation value, the higher the area ratio of cyan dots. In other words, as the cyan gradation value increases, red light is more absorbed by cyan dots and the amount Ar of red light absorbed becomes larger. In this respect, the same applies to the magenta gradation value.

In step S14, the image forming apparatus 1 executes calibration of CM based on the amounts of reflected light of RG. The calibration of CM is executed as the calibration of the area ratio of cyan toner dots and the area ratio of magenta toner dots in the halftone processing. Specifically, for example, when the detection result of the amount Ar of light absorbed by a patch formed based on the R gradation data for calibration of C is larger than a set amount of light absorbed which is a

known predetermined amount of light absorbed, i.e., when the area ratio of cyan dots is higher, calibration is made to reduce the area ratio of cyan dots to bring the amount Ar of light absorbed closer to the set amount of light absorbed. Thus, in the image forming apparatus 1, the scan result of a print image to be actually formed is calibrated to approach the RGB data for calibration.

In step S15, the image forming apparatus 1 executes calibration of K based on the amount of reflected light of RGB. The calibration of K is executed as the calibration of the area ratio of black toner dots of a gray patch in the halftone processing. Specifically, for example, when the detection result of the amount of light absorbed (not shown) by a patch formed based on the K gradation data for calibration of K is larger than a set amount of light absorbed which is a known predetermined amount of light absorbed, i.e., when the area ratio of black dots is higher, calibration is made to reduce the area ratio of black dots to bring the amount of light absorbed closer to the set amount of light absorbed.

In step S16, the image forming apparatus 1 executes calibration of Y based on the amount of reflected light of B. The calibration of Y is executed as the calibration of the area ratio of yellow toner dots in the halftone processing. The basic manner of this calibration is the same as the calibration of CM (step S14) to be executed based on the amounts of reflected light of RG. However, the calibration of Y is different, from the calibration of CM (step S14) based on the amounts of reflected light of RG, in that the B gradation data for calibration of Y (corresponding to the detection result of the amount Ab of light absorbed by a patch) is corrected using a B correction value $\alpha$ acquired by a method to be described hereinafter.

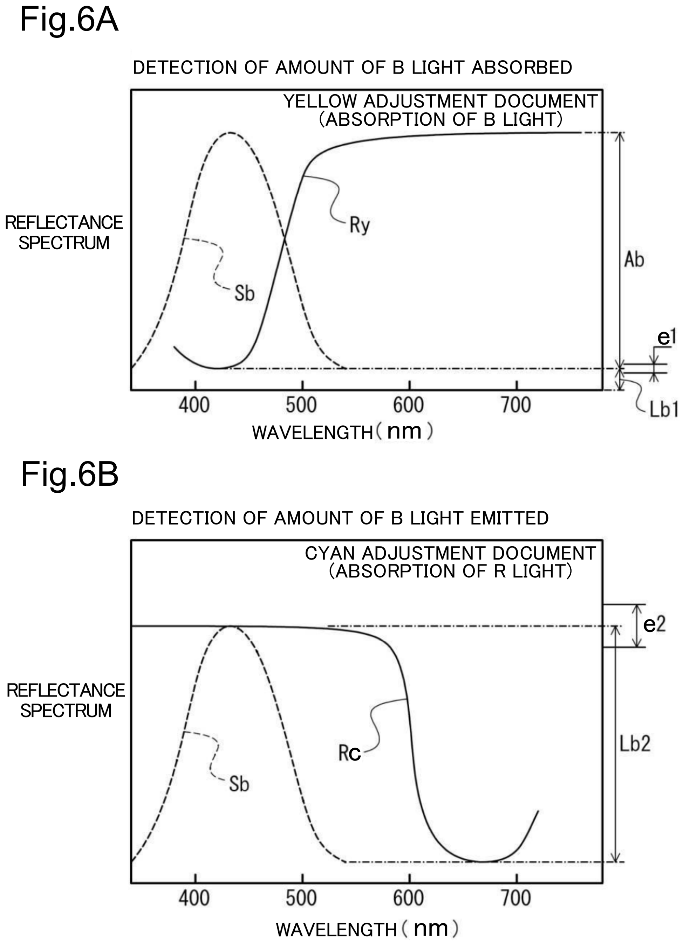

FIGS. 6A and 6B are graphs showing, in the one embodiment, the relationship between the frequency characteristic of a yellow calibration patch and the frequency range of blue light and the relationship between the frequency characteristic of a cyan calibration patch and the frequency range of blue light, respectively. FIG. 6A shows an example of a reflectance spectrum Ry of a yellow calibration patch (referred to also as a Y calibration patch) on a yellow adjustment document and an example of an absorption spectrum Sb of the yellow calibration patch. The amount Ab of light absorbed indicates the peak value of the amount of light absorbed by a yellow calibration patch on a yellow adjustment document, i.e., the amount of light not reflected by the patch. The amount Ab of light absorbed reaches its peak in the wavelength band of blue light.

FIG. 6B shows an example of a reflectance spectrum Rc of a cyan calibration patch (referred to also as a C calibration patch) on a cyan adjustment document and an example of an absorption spectrum Sb of the yellow calibration patch. In other words, FIG. 6B is a graph showing the relationship between the reflectance spectrum Rc (FIG. 5A) of the cyan calibration patch and the absorption spectrum Sb (FIG. 6A) of the yellow calibration patch. According to the reflectance spectrum Rc of the cyan calibration patch, blue light in a wavelength range of 400 nm to 500 nm is little absorbed and is almost reflected.

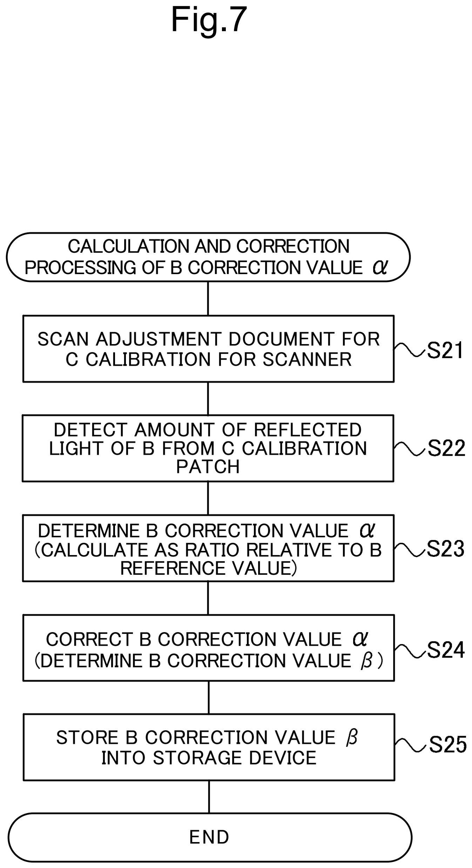

FIG. 7 is a flowchart showing the contents of processing for calculating and correcting a B correction value $\alpha$ in the one embodiment. In step S21, the user scans an adjustment document for C calibration for scanner. The image forming apparatus 1 includes an adjustment document for CMYK calibration for scanner and calibration using this adjustment document is made in the same manner as in the calibration relating to the image forming device 20. However, the processing for calculating a B correction value $\alpha$ is different from the calibration for general scanners in that a variation in the amount of blue light of the light source 52 as a white light source is detected using an adjustment document for C calibration for scanner, which is an adjustment document commonly used for the calibration of cyan (red light). The adjustment document for C calibration for scanner is an example of a patch prepared for calibration of the light having the second spectrum.

In step S22, the image reading device 50 detects the amount of reflected light of B from a C calibration patch on the adjustment document for C calibration for scanner. The reason why the adjustment document for C calibration for scanner for use in calibrating red light is used for detection of the amount of reflected light of B is that red light and blue light are largely different in wavelength and, therefore, the adjustment document for C calibration for scanner almost reflects blue light without absorbing it.

Specifically, for example, assuming that the amount Lb1 of reflected light of B from a Y calibration patch on an adjustment document for Y calibration for scanner is detected (see FIG. 6A), blue light is absorbed by the Y calibration patch and, thus, the amount e1 of detected variation in the amount Lb1 of reflected light of B is small. Unlike this, in this embodiment, the amount Lb2 of reflected light of B from the C calibration patch is detected (see FIG. 6B), blue light is not absorbed by the C calibration patch, and, therefore, the amount e2 of detected variation in the amount Lb2 of reflected light of B is large. Thus, variations in the amount of blue light of the light source 52 which is a white light source can be detected with high accuracy.

In step S23, the control device 10 determines the B correction value $\alpha$. The B correction value $\alpha$ is calculated, by the control device 10, as the ratio between the B reference value data Bdef read from the storage device 40 by the control device 10 and the gradation value RGB_Bc according to the amount of reflected light of B. The B reference value data Bdef is the amount of light to be detected when the amount of blue light of the light source 52 is a reference value. Specifically, the control device 10 determines the B correction value $\alpha$ as a value of the gradation value RGB_Bc divided by the B reference value data Bdef as given by the following formula 1.

$$\text{B correction value } \alpha = \text{RGB_Bc/Bdef ... Formula 1}$$

The B correction value $\alpha$ is the ratio between the gradation value to be detected when the amount of blue light of the light source 52 is a reference value and an actually detected gradation value. Specifically, for example, assuming that the actually detected RGB_Bc value is 1/1.2 of the gradation value to be detected when the amount of blue light of the light source 52 is a reference value, the B correction value $\alpha$ is 1/1.2 (i.e., $\alpha$ = 1/1.2/1).

In a general technique not according to this embodiment, cyan calibration patches for use in calculating a B correction value $\alpha$ have individual differences and have variations in the degree of color within a range of specifications. Therefore, the calculated B correction value $\alpha$ may vary and the density value (the gradation value) of yellow calculated using the B correction value $\alpha$ may vary.

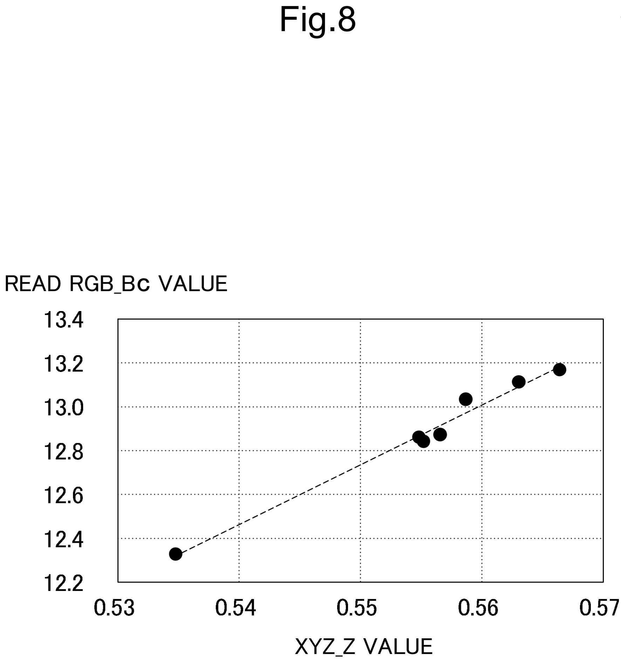

The Lab values of the cyan calibration patch are known and, therefore, the Z value in an XYZ color system can be calculated from the Lab values. Furthermore, as shown as an example in FIG. 8, the read RGB_Bc value (the gradation value RGB_Bc) according to the amount of reflected light of B read by the image reading device 50 has a correlation with the Z value. In view of this, in the present invention, it was invented to correct the B correction value $\alpha$ using the read RGB_Bc value and the Z value.

In step S24, as shown by the formula 1 above, the control device 10 corrects Bdef for use in determining the B correction value $\alpha$ by multiplying it by a correction factor CF (corrected Bdef = Bdef $\times$ correction factor CF) and corrects the B correction value $\alpha$ (corrected B correction value $\beta$ = RGB_Bc/corrected Bdef). The correction factor CF is calculated by adding a division result obtained by dividing a Z reference value (XYZ_Zdef value) set as a reference of a Z value (XYZ_Z value) in an XYZ color system obtained based on the amount (the read RGB_Bc value) of reflected light of light having a first spectrum by the Z value to a weight W according to a difference result obtained by subtracting the Z value from the Z reference value. The formula 2 below shows the correction factor CF. The formula 3 below shows the weight W. The XYZ_Zdef value is stored in the storage device 40.

$$\text{Correction factor CF} = (\text{XYZ_Zdef/XYZ_Z}) + \text{weight W ... Formula 2}$$

$$\text{Weight W} = (\text{XYZ_Zdef - XYZ_Z}) \times \text{weight factor WF ... Formula 3}$$

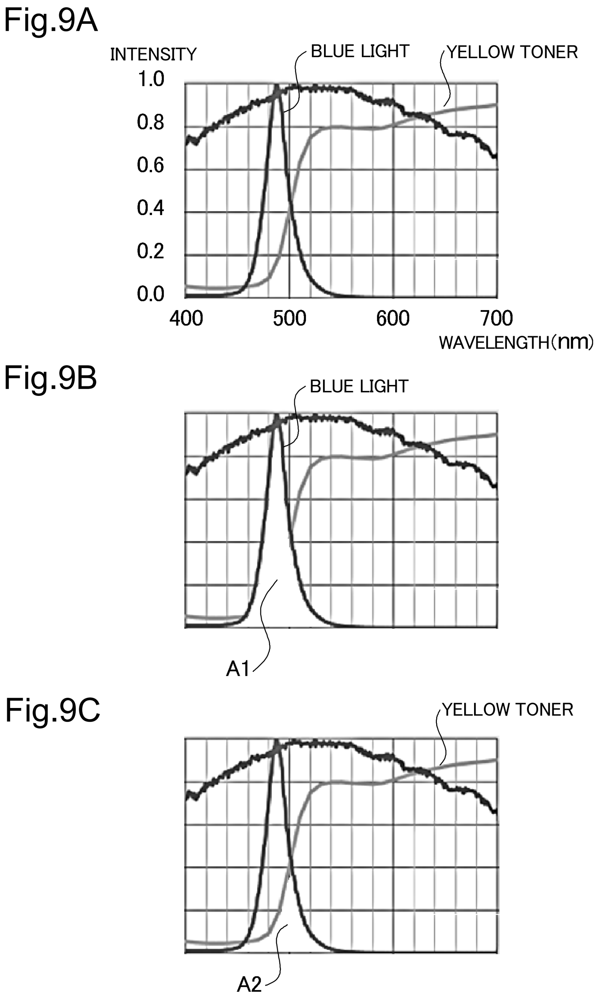

The weight factor WF is calculated based on the relative degree of influence of the reflection intensity of yellow toner on the intensity of blue light. FIGS. 9A to 9C are graphs showing the relationship between the reflection intensity of yellow toner and the intensity of blue light in the one embodiment. The region A1 shown in FIG. 9B shows a region enclosed by the graph representing the intensity of blue light. The region A2 shown in FIG. 9C shows a region of the region A1 overlapped with a region enclosed by the graph representing the reflection intensity of yellow toner. The above relative degree of influence is determined by the ratio of the region A2 (the area thereof) to the region A1 (the area thereof). In the graphs shown in FIGS. 9A to 9C, the region A2 to the region A1 is approximately 0.4. Therefore, the weight factor WF is set at 0.4. The area of the region enclosed by the graph can be determined by integrating the intensity represented by the graph with respect to wavelength.

Thus, the corrected B correction value $\beta$ can be represented, for example, by the following formula 4.

$$\text{B correction value } \beta = \text{RGB_Bc/((uncorrected Bdef)} \times \text{((XYZ_Zdef/XYZ_Z)+(XYZ_Zdef-XYZ_Z)} \times \text{0.4))} \quad \text{Formula 4}$$

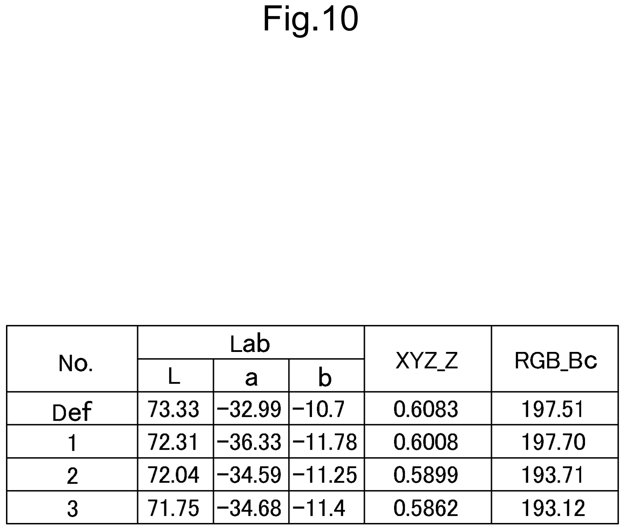

FIG. 10 is a table showing as examples read RGB_Bc values, Lab values calculated from the read RGB_Bc values, and XYZ_Z values calculated from the Lab values. FIG. 10 shows the read RGB_Bc values obtained by scanning three different calibration original documents (cyan calibration patches), and the Lab values and XYZ_Z values based on the read RGB_Bc values. FIG. 10 also shows the reference values (default values) shown in FIG. 2.

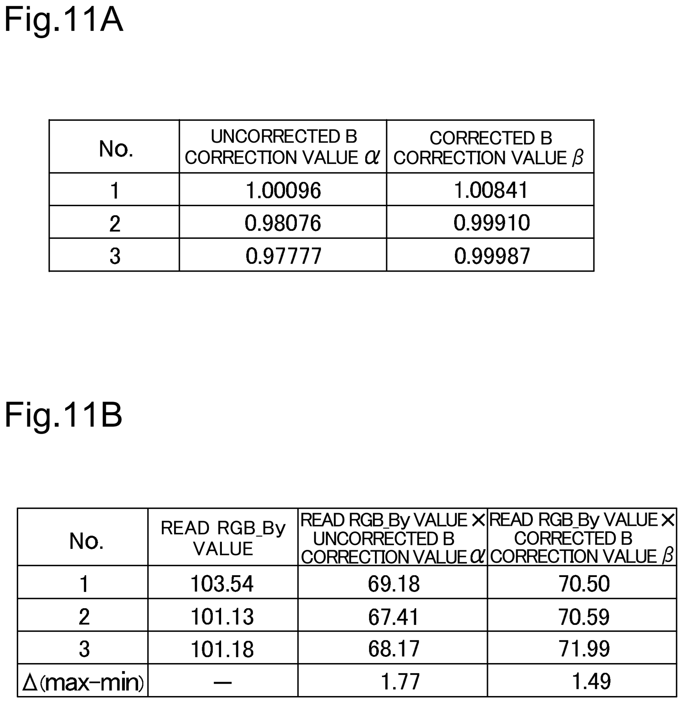

The B correction value $\alpha$ can be determined, as shown in the formula 1, by dividing the read RGB_Bc value by the B reference value data Bdef stored in the storage device 40. FIG. 11A shows, based on the read RGB_Bc values obtained by scanning the above three different calibration original documents, the respective B correction values $\alpha$ obtained from the formula 1 and the respective B correction values $\beta$ corrected using the formula 4.

Furthermore, FIG. 11B shows results in which the read RGB_By values obtained by scanning the above three different calibration original documents (yellow calibration patches) have been corrected by multiplying them by the respective B correction values $\alpha$, and results in the read RGB_By values have been corrected by multiplying them by the respective corrected B correction values $\beta$.

As shown in FIG. 11B, the variation among the read RGB_By values corrected using uncorrected B correction values $\alpha$ was 1.77, whereas the variation among the read RGB_By values corrected using corrected B correction values $\beta$ was 1.49 showing a reduction in variation.

In step S25, the control device 10 stores the corrected B correction value $\beta$ into the storage device 40. As described above, the corrected B correction value $\beta$ is smaller in variation than the uncorrected B correction value $\alpha$. Therefore, using the corrected B correction value $\beta$, even if the amount of blue light from the light source 52 varies from the reference value, the amount of light when the amount of blue light from the light source 52 is the reference value can be estimated with high accuracy.

As can be seen from the above, the image forming apparatus 1 according to this embodiment can further reduce a reading error due to a variation in blue light from a white light source without provision of new hardware.

The present invention can be implemented, not only by the above embodiment, but also by the following modifications.

Modification 1: Although in the above embodiment calibration is made by adjusting the area ratio of dots, calibration may be made by adjusting, for example, the exposure energy, the charging bias or the developing bias. The variations in the amounts of light of RGB from the light source can be calibrated by adjusting AGC, but the calibration through image formation processing as described above has the advantage of keeping the dynamic range of RGB values when reading an image from being narrowed.

Modification 2: Although in the above embodiment a white light source including: a blue LED (referred to also as an original light source) that emits light having a first spectrum; and a yellow phosphor that emits light having a second spectrum by being excited by the light having the first spectrum is used as an example, the white light source to be used is not limited to this example.

Modification 3: Although in the above embodiment an image reading device with a CCD system is employed, the system capable of being employed for the image reading device is not limited to the CCD system and may be another system, such as a CIS system. In the CIS system, different original light sources are generally used for RGB. Therefore, the present invention can be applied to the CIS system in order to reduce variations among the different original light sources of RGB. In this case, the white light source includes: an original light source that emits light having a first spectrum; an original light source that emits light having a second spectrum, and an original light source that emits light having a third spectrum.

Furthermore, the white light source may not necessarily be constituted by three original light sources of RGB and may be constituted by, for example, a combination (RG spectra) of an original light source of blue light and an original light source of yellow light, a combination (GB spectra) of an original light source of red light and an original light source of blue-green light, or a combination (RB spectra) of an original light source of green light and an original light source of violet light.

The white light source is generally sufficient to be a light source that includes: a first original light source that emits light having a first spectrum; and a second original light source that emits light having a second spectrum, and emits white light containing the light having the first spectrum and the light having the second spectrum. Alternatively, as in the above embodiment, the second original light source may be a phosphor that emits light having a second spectrum by being excited by light having a first spectrum.

Modification 4: Although in the above embodiment an adjustment document for C calibration for scanner is used as an example of a patch prepared for calibration of the light having the second spectrum, the prepared patch may be an adjustment document for M calibration for scanner. However, generally, an adjustment document for C calibration for scanner is more preferably used because it has a lower absorptivity in the wavelength range of blue light than an adjustment document for M calibration for scanner.

Modification 5: Although in the above embodiment the present invention is applied to an image forming apparatus, the present invention is applicable also to image reading devices, such as a dedicated scanner.

In the general technique described previously, using a cyan calibration patch on a cyan adjustment document for use in calibration of cyan, the amount of reflected blue light from the cyan calibration patch is detected and the correction value of the amount of reflected blue light is calculated from the ratio between the detected amount of reflected light and a reference value. Thus, the accuracy of calculation of the density value of yellow can be increased.

However, cyan adjustment documents for use in calculating the above correction value have individual differences and have variations in the degree of color within a range of specifications. Therefore, the calculated correction value may vary and the density value of yellow calculated using the correction value may vary.

Unlike the above general technique, in the above embodiment, a color reproduction error due to variations among light sources for use in image reading can be further reduced.

## Claims

1. An image forming apparatus (1) that reads an image on an original document and forms an image based on the read image, the image forming apparatus (1) comprising:

   a light source (52) comprising a first original light source (52a) that emits light having a first spectrum, and a second original light source (52b) that emits light having a second spectrum, and emits the light having the first

spectrum and the light having the second spectrum;
an image reading device (50) that generates image data of an RGB color system according to reflected light of the light having the first spectrum from the original document and reflected light of the light having the second spectrum from the original document;
an image forming device (20) that forms, based on the image data, an image with a recording agent of a CMYK color system; and
a controller (10) that makes a determination of, as a ratio between an amount of reflected light of the light having the first spectrum from a calibration original document prepared for calibration of the light having the second spectrum and a calibration reference value set as a reference of an amount of reflected light of the light having the first spectrum, a correction value for use in calibrating an amount of the light having the first spectrum,
wherein the controller (10) corrects the correction value by multiplying the calibration reference value for use in the determination of the correction value by an added value in which a division result obtained by dividing a Z reference value set as a reference of a Z value in an XYZ color system obtained based on the amount of reflected light of the light having the first spectrum by the Z value is added to a weight according to a difference result obtained by subtracting the Z value from the Z reference value.

**2.** The image forming apparatus (1) according to claim 1, wherein

the light source (52) emits white light,
the first original light source (52a) is a blue light source, and
the second original light source (52b) is a phosphor that emits the light having the second spectrum by being excited by the light having the first spectrum.

**3.** The image forming apparatus (1) according to claim 1, wherein the light source (52) has a structure that sequentially turns on light of three colors consisting of red light, green light, and blue light.

**4.** The image forming apparatus (1) according to any one of claims 1 to 3, wherein in determining the correction value the controller (10) calculates a weight factor based on a difference between the Z value in the XYZ color system and the Z reference value and the weight factor is calculated based on a relative degree of influence of a reflection intensity of yellow toner on an intensity of the blue light.

**5.** The image forming apparatus (1) according to claim 2, wherein

the calibration original document prepared for calibration of the light having the second spectrum is a cyan calibration document,
the weight is obtained by multiplying the difference result by a weight factor (0 to 1, both inclusive), and
the weight factor is calculated based on a relative degree of influence of a reflection intensity of the recording agent of yellow color on an intensity of the blue light.

# Fig.1

1
10
CONTROL DEVICE
40
STORAGE DEVICE
CD
CALIBRATION DATA
CALIBRATION IMAGE DATA
CI
B REFERENCE VALUE DATA
Bdef
50
IMAGE READING DEVICE
CALIBRATION DATA
(CALIBRATION IMAGE DATA ID)
TIMING SIGNAL
51
LIGHT SOURCE DRIVER
52a
BLUE LED
52
YELLOW PHOSPHOR
52b
L
P
53
IMAGE SENSOR
53a
LIGHT-RECEIVING ELEMENT
54
SIGNAL PROCESSING DEVICE
55
AGC PROCESSING DEVICE
IMAGE DATA ID
20
IMAGE FORMING DEVICE
22
CALIBRATION DENSITY SENSOR
21
COLOR CONVERSION PROCESSING DEVICE
23
EXPOSURE DEVICE
24c~24k
DEVELOPING DEVICE
25c~25k
CHARGING DEVICE

Fig.2

| Lab | | | XYZ_Zdef | RGB_Bdef |
|---|---|---|---|---|
| L | a | b | | |
| 73.33 | −32.99 | −10.7 | 0.6083 | 197.51 |

1
201
50
20
23
27b
27a
24k
Lk
29k
26k
27C
Ly
24y
26y
Lc
26C
24C
70
Lm
24m
26m
22
27d
60
P

Fig.3

Fig.4

CALIBRATION PROCESSING PROCEDURE
PRINT ADJUSTMENT DOCUMENT FOR CMYK CALIBRATION
S11
SCAN ADJUSTMENT DOCUMENT FOR CMYK CALIBRATION
S12
DETECT AMOUNTS OF REFLECTED LIGHT OF RGB FROM CMYK CALIBRATION PATCHES
S13
CALIBRATE CM BASED ON AMOUNTS OF REFLECTED LIGHT OF RG
S14
CALIBRATE K BASED ON AMOUNT OF REFLECTED LIGHT OF RGB
S15
CALIBRATE Y BASED ON AMOUNT OF REFLECTED LIGHT OF B AND B CORRECTION VALUE α
S16
END

# Fig.5A

DETECTION OF AMOUNT OF R LIGHT ABSORBED
CYAN ADJUSTMENT DOCUMENT
(ABSORPTION OF R LIGHT)
Rc
Sr
Ar
REFLECTANCE SPECTRUM
400
500
600
700
WAVELENGTH ( nm )

# Fig.5B

DETECTION OF AMOUNT OF G LIGHT ABSORBED
MAGENTA ADJUSTMENT DOCUMENT
(ABSORPTION OF G LIGHT)
Rm
Sg
Ag
REFLECTANCE SPECTRUM
400
500
600
700
WAVELENGTH ( nm )

Fig.6A

DETECTION OF AMOUNT OF B LIGHT ABSORBED
YELLOW ADJUSTMENT DOCUMENT
(ABSORPTION OF B LIGHT)
REFLECTANCE SPECTRUM
Ry
Sb
Ab
e1
Lb1
400
500
600
700
WAVELENGTH(nm)

Fig.6B

DETECTION OF AMOUNT OF B LIGHT EMITTED
CYAN ADJUSTMENT DOCUMENT
(ABSORPTION OF R LIGHT)
REFLECTANCE SPECTRUM
e2
Rc
Sb
Lb2
400
500
600
700
WAVELENGTH(nm)

Fig.7

CALCULATION AND CORRECTION PROCESSING OF B CORRECTION VALUE α
SCAN ADJUSTMENT DOCUMENT FOR C CALIBRATION FOR SCANNER
S21
DETECT AMOUNT OF REFLECTED LIGHT OF B FROM C CALIBRATION PATCH
S22
DETERMINE B CORRECTION VALUE α (CALCULATE AS RATIO RELATIVE TO B REFERENCE VALUE)
S23
CORRECT B CORRECTION VALUE α (DETERMINE B CORRECTION VALUE β)
S24
STORE B CORRECTION VALUE β INTO STORAGE DEVICE
S25
END

Fig.8

READ RGB_Bc VALUE
13.4
13.2
13.0
12.8
12.6
12.4
12.2
0.53
0.54
0.55
0.56
0.57
XYZ_Z VALUE

Fig.9A

INTENSITY
BLUE LIGHT
YELLOW TONER
1.0
0.8
0.6
0.4
0.2
0.0
400
500
600
700
WAVELENGTH(nm)

Fig.9B

BLUE LIGHT
A1

Fig.9C

YELLOW TONER
A2

# Fig.10

| No. | Lab | | | XYZ_Z | RGB_Bc |
|---|---|---|---|---|---|
| | L | a | b | | |
| Def | 73.33 | −32.99 | −10.7 | 0.6083 | 197.51 |
| 1 | 72.31 | −36.33 | −11.78 | 0.6008 | 197.70 |
| 2 | 72.04 | −34.59 | −11.25 | 0.5899 | 193.71 |
| 3 | 71.75 | −34.68 | −11.4 | 0.5862 | 193.12 |

# Fig.11A

| No. | UNCORRECTED B CORRECTION VALUE $\alpha$ | CORRECTED B CORRECTION VALUE $\beta$ |
|---|---|---|
| 1 | 1.00096 | 1.00841 |
| 2 | 0.98076 | 0.99910 |
| 3 | 0.97777 | 0.99987 |

# Fig.11B

| No. | READ RGB_By VALUE | READ RGB_By VALUE × UNCORRECTED B CORRECTION VALUE $\alpha$ | READ RGB_By VALUE × CORRECTED B CORRECTION VALUE $\beta$ |
|---|---|---|---|
| 1 | 103.54 | 69.18 | 70.50 |
| 2 | 101.13 | 67.41 | 70.59 |
| 3 | 101.18 | 68.17 | 71.99 |
| Δ(max-min) | — | 1.77 | 1.49 |

Europäisches Patentamt
European Patent Office
Office européen des brevets

# EUROPEAN SEARCH REPORT

Application Number
EP 26 16 1942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/064149 A1 (OGASAWARA REIKO [JP]) 2 March 2017 (2017-03-02) * the whole document * ----- | 1-5 | INV. H04N1/028 H04N1/60 |
| A | US 2011/096375 A1 (MIKAMI RYO [JP]) 28 April 2011 (2011-04-28) * paragraphs [0004] - [0011] * ----- | 1-5 | |
| A | WO 2019/017127 A1 (KYOCERA DOCUMENT SOLUTIONS INC [JP]) 24 January 2019 (2019-01-24) * abstract * ----- | 1-5 | |

TECHNICAL FIELDS SEARCHED (IPC)

H04N

The present search report has been drawn up for all claims

2

| Place of search | Date of completion of the search | Examiner |
|---|---|---|
| The Hague | 23 June 2026 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 26 16 1942

This annex lists the patent family members relating to the patent documents cited in the above-mentioned European search report. The members are as contained in the European Patent Office EDP file on
The European Patent Office is in no way liable for these particulars which are merely given for the purpose of information.

23-06-2026

| Patent document cited in search report | Publication date | Patent family member(s) | Publication date |
|---|---|---|---|
| US 2017064149 A1 | 02-03-2017 | CN 106488077 A | 08-03-2017 |
| | | JP 6350878 B2 | 04-07-2018 |
| | | JP 2017046249 A | 02-03-2017 |
| | | US 2017064149 A1 | 02-03-2017 |
| US 2011096375 A1 | 28-04-2011 | JP 2011097235 A | 12-05-2011 |
| | | US 2011096375 A1 | 28-04-2011 |
| WO 2019017127 A1 | 24-01-2019 | JP 6760505 B2 | 23-09-2020 |
| | | JP WO2019017127 A1 | 07-11-2019 |
| | | WO 2019017127 A1 | 24-01-2019 |

EPO FORM P0459

For more details about this annex : see Official Journal of the European Patent Office, No. 12/82